# EUROPÄISCHE PATENTSCHRIFT

(11) **EP 0 741 677 B1**
(45) Veröffentlichungstag und Bekanntmachung des Hinweises auf die Patenterteilung: **02.06.1999**
(21) Anmeldenummer: 95904963.6
(22) Anmeldetag: 18.01.1995
(51) Int. Cl.: C04B 28/34

(54) **VERFAHREN ZUR HERSTELLUNG EINER ÜBERWIEGEND ANORGANISCHEN GESCHÄUMTEN MASSE, SOWIE EIN(E) NACH DIESEM VERFAHREN HERSTELLBARE(R) MASSE ODER FORMTEIL**
PROCESS FOR PRODUCING A MAINLY INORGANIC FOAM, AND THUS PRODUCED MASS OR MOULDED PART
PROCEDE DE PRODUCTION D'UNE MOUSSE PRINCIPALEMENT INORGANIQUE, MASSE ET PIECE MOULEE PRODUITES SELON CE PROCEDE

(30) Priorität: 21.01.1994 AT 110/94
(43) Veröffentlichungstag der Anmeldung: 13.11.1996
(73) Patentinhaber: MELCHER, Gerhard, A-1100 Wien 10 (AT)
(72) Erfinder: MELCHER, Gerhard, A-1100 Wien 10 (AT)
(86) Internationale Anmeldenummer: AT9500008
(87) Internationale Veröffentlichungsnummer: WO9519939

(56) Entgegenhaltungen:
- EP-A- 0 136 378
- EP-A- 0 282 240
- US-A- 3 148 996
- CHEMICAL ABSTRACTS, vol. 101, no. 4, 23.Juli 1984 Columbus, Ohio, US; abstract no. 27550y, in der Anmeldung erwähnt & DD,A,205 429 (T.BROECKER)

## Beschreibung

Die Erfindung betrifft ein Verfahren zur Herstellung einer zumindest überwiegend anorganischen Masse mit einer Dichte von vorzugsweise mehr als 0,15 g/cm³ aus einer ersten Komponente auf Basis einer Phosphatlösung und einer Härter-Treibmittelkomponente, die beiden Komponenten selbst, sowie ein(e) insbesondere durch das erfindungsgemäße Verfahren herstellbare(s) geschäumte(s) Masse oder Formteil.

Zur thermischen Isolierung werden, beispielsweise im Ofenbau, temperaturbeständige Leichtbausteine, Fasermaterialien oder anorganische Schäume eingesetzt. Die Nachteile der Leichtbausteine sind deren Sprödigkeit. Die Schwäche der Fasermatten liegt, neben der allgemeinen Umweltproblematik von Fasern, in deren geringen Eigenfestigkeit, die bei bestimmten Anwendungen zu einer Zerfaserung der Matten führen kann. Die anorganischen Schäume wiederum sind meistens auf Wasserglasbasis oder Glasbasis und besitzen, durch den Glasschmelzpunkt bedingt oft relativ niedrige Einsatztemperaturen. Es ist Aufgabe dieser Erfindung ein umweltfreundliches, vielseitig verwendbares Isoliermaterial auch für hohe Temperaturbereiche zu beschreiben.

Derartige Schäume sind unter anderem aus der US Patentschrift 3 148 996 bekannt, wo aus einer wäßrigen, sauren Lösung eines Metallphosphates mit zugemischtem feinpulvrigem Calziumsilikat (Wollastonit) nach fünf Minuten Reifezeit, vor dem Erstarren der Masse durch Einrühren von festem Calziumcarbonat als Treibmittel ein Schaum hergestellt wird.

In der US Patentschrift 3 330 675 wird anstelle des Calziumsilikates eine basische Verbindung eingesetzt. Eine Aluminiumphosphatlösung wird dabei mit äquivalenten Mengen einer basischen Substanz und einer gasabspaltenden, als Treibmittel wirkenden Verbindung versetzt.

In der DE-A-27 56 198 wird auf der Basis von Metallphosphat und pulverförmigem Carbonat ein Schaumstoff mit einem spezifischen Gewicht unter 0,15 g/cm³ beschrieben. Hier wird ein Äquivalentverhältnis der Metallvalenzen zu den Protonen der Phosphatgruppen von 0,65 bis 0,95 eingehalten und es kommen überwiegend hochviskose, bereits vorvernetzte Me-tallphosphatlösungen zum Einsatz, in welche das feste Carbonat einzurühren ist.

Ein kontinuierliches Verfahren zur Herstellung eines Schaumes von einem niedrigen spezifischen Gewicht, mit welchem Formen gefüllt werden, ist in der DD 205 429 beschrieben. Hier wird zu einer angesäuerten Metallphosphätlösung, welche Füllstoffe enthalten kann, eine Suspension eines zweiwertigen Metallcarbonates, kontinuierlich in einer Zweikomponentenspritzpistole gemischt und die Masse mit einem gasförmigen Druckmedium in Formen oder zu füllende Räume geblasen.

In keinem der angeführten Patente ist eine schäumbare Masse auf Phosphatbasis mit einer einstellbaren Aushärtungscharakteristik oder mit weitgehend unabhängig voneinander einstellbaren Verarbeitungsparametern wie Mischzeit, Steigzeit, Abbindezeit für Klebfreiheit, etc., wie sie für einem Polyurethanschaum angegeben werden können, offen gelegt. Die Erfindung, wie sie in den Ansprüchen offengelegt ist, stellt sich somit die Aufgabe diese Nachteile zu überwinden und eine schäumende und erstarrende anorganische Masse zu beschreiben, in welcher als wesentlicher Vorteil, bei in weiten Bereichen einstellbarer Dichte, obige Verarbeitungsparameter weitgehend unabhängig voneinander einstellbar sind.

Wichtig für die Homogenität des Schaumes ist bei schnell reagierenden Komponenten die rasch zu erzielende Gleichmäßigkeit in der Verteilung von Härter und Treibmittel in der sauren Komponente. Die Zugabe dieser Stoffe kann üblicherweise auf zwei Arten geschehen; als pulverförmiger Feststoff oder als Suspension in Wasser. Eine Lösung in Wasser ist nur bei Alkali- oder Ammoncarbonaten oder Hydrogencarbonaten möglich.

Die Verwendung von einzurührenden Feststoffen führt vor allem bei großen Ansätzen und bei möglichen Mischzeiten von nur einigen Sekunden aufgrund der Reaktionen an den Phasengrenzflächen der Feststoffoberflächen dazu, daß während des Prozesses des Einmischens lokal unterschiedliche Konzentrationen auftreten und damit unterschiedliche Vernetzungsreaktionen ablaufen werden. Ein rasches, gleichmäßiges, streng stöchiometrisches Reagieren, wie es Voraussetzung bei einer rasch ablaufenden Schaumhärtung ist, ist für den gesamten Schaum ansatz vor allem auch bei größeren Mengeneinsätzen notwendig und schwer im diskontinuierlichen Mischverfahren zu erzielen. Es empfiehlt sich daher vor allem bei der Herstellung von größeren Schaummengen auf kontinuierliche Mischverfahren zurückzugreifen. Es wird daher günstig sein bereits mit Suspensionen, also bereits mit in Wasser vorverteilten Pulvern zu arbeiten, da diese ein wesentlich gleichmäßigeres, rasches Einmischen in die zweite saure Komponente ermöglichen. Allerdings muß bemerkt werden, daß dieses Verfahren naturgemäß bei mit Wasser reagierenden Oxiden, wie beispielsweise Calziumoxid, nicht anwendbar ist. Hier ist beispielsweise bei großen Ansätzen ein kontinuierliches Einmischen der Feststoffpulver in die saure Komponente, etwa mit Hilfe von Stopfschnecken in eine Mischkammer, notwendig.

Bei der alleinigen Verwendung von Carbonat als Härter und Schäumer ist naturgemäß eine getrennte Einstellung von Härtungsgeschwindigkeit und Treibkraft nicht zu erzielen. Dies ist erfindungsgemäß nur dann möglich, wenn es gelingt im Härtungsschritt möglichst homogen und gleichzeitig sowohl Treibmittel als auch Härter mit genau abgestimmten Eigenschaften in exakt dosierten Mengen bereits fein vorverteilt in eine saure Phosphatlösung mit einer definierten Viskosität und einem definierten Säuregehalt einzumischen.

Bei Versuchen hat sich gezeigt, daß es vorteilhaft ist von der dreibasigen Phosphorsäure in der das primäre Proton bereits durch ein mehrwertiges Kation abgesättigt ist auszugehen und im Härtungs/Schäumungsschritt im wesentlichen das zweite sekundäre Proton abzusättigen. In einer dritten Stufe kann dann während der Lagerung des Schaumes durch eine langsame Reaktion mit einem basischen Füllstoff das tertiäre Wasserstoffatom abgesättigt werden. Es zeigte sich, daß ein äquimolarer Einsatz von Säure und Base in einem Schritt nicht günstig ist.

Als wäßrige Phosphatlösungen können in bevorzugter Weise käuflich erhältliche 50%ige Monoalumininiumphosphatlösungen oder Lösungen von Metalloxiden in beispielsweise 75%eigen Phosphorsäure verwendet werden, wobei 0,8 bis 1,75 Protonen der dreibasigen Phosphorsäure durch die Kationen neutralisiert sind und diese Lösung als mehrwertige Kationen Aluminium, Magnesium, Calzium, Barium, Zink, Nickel, Cobalt und Mangan enthalten kann.

Als Härter kommen Substanzen in Frage, welche es in Abhängigkeit von Reaktivität, Korngröße, etc. gestatten, daß eine saure Lösung eines Metallphosphates innerhalb von Sekunden bis einigen Minuten durch räumliche Vernetzung abgebunden ist. Weiters muß die Reaktivität der einzelnen Komponenten mit der Menge, die für die Vernetzung (zur teilweisen oder vollständigen Neutralisation der Phosphorsäure) notwendig ist, abgestimmt sein. Dies führt dazu, daß man ähnliche Verhältnisse, wie bei der Polyurethanschaumherstellung einstellen kann (zum Beispiel: Startzeit: 5 s, Steigzeit: 1,5 min, Abbindezeit: 2 min, Druckfestigkeitszeit: 3 min).

Die Bedeutung der Auswahl des Härters wird insoferne leicht erkennbar, als es zum Beispiel sehr viele Arten von Magnesiumoxid gibt, die sich wesentlich in ihren Eigenschaften in Abhängigkeit von ihrer Herstellungsart unterscheiden. S o gibt es gefällte oder natürliche Oxide, welche bei verschiedenen Temperaturen getrocknet oder gebrannt und dann zu unterschiedlichen Korngrößen gemahlen werden können. Dadurch wird vor allem ihre Reaktivität, insbesondere ihre Säurelöslichkeit, stark beeinflußt. Es empfiehlt sich daher immer den Rohstoff vor seiner Verwendung unter seinen spezifischen Einsatzbedingungen zu testen und auszuwählen.

Als Härtersubstanzen können bestimmte Metalloxide ZnO, MgO, CaO, BaO, SrO, FeO, Fe₂O₃, Zirkonoxid oder Hydroxide, wie Ca(OH)₂, Mg(OH)₂, Zn(OH)2, Eisenhydroxid, Mn(OH)2, Al(OH)₃, etc., oder Salze schwacher Säuren verwendet werden. So ist zweifelsfrei auch ein Carbonat mehrwertiger Kationen als Härter wirksam, auch wenn in der Regel hauptsächlich seine Wirkung als Treibmittel ausgenützt wird. Derartige Carbonatpulver, die gleichzeitig mit der Kohlendioxidentwicklung mehrwertige Kationen als Härter frei setzen, sind üblicherweise Carbonate von Calzium und Magnesium, oder Carbonate von Zink, Strontium, Barium, Eisen, Nickel, etc.. Analog wirken aber auch basische Carbonate, wie zum Beispiel von Zink, Magnesium, Eisen, Mangan, Nickel und Kupfer.

Auch andere Härter, wie beispielsweise natürliche oxidische, basische Steinmehle, die zum Beispiel auch Carbonate enthalten können, oder künstlich hergestellte Mischoxide oder Silikate, wie beispielsweise hydraulisch abbindende Zemente, mit definierten Härtungscharakteristikas können verwendet werden. Es ist besonders vorteilhaft, wenn ein innerhalb einer Zeit von 10s bis 60 min reagierender rascher Härter in einer Menge umgesetzt wird, in welcher er überwiegend die sekundären Phosphatgruppen absättigt.

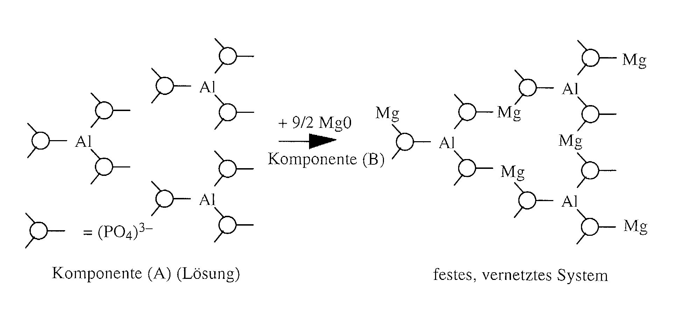

Die Wirkung der Härter zeigt das Vernetzungsschema von Zeichnung 1. Es erklärt, daß in günstiger Weise im Schaum fast alle sekundären Wasserstoffatome (also etwa 2/3 der vorhandenen Protonen der Phosphorsäuregruppen) durch mehrwertige Kationen zur Gerüstbildung vernetzt sein sollten. Vorteile eines Zerlegens der Vernetzungsschritte in exakte Teilstufen sind offensichtlich, da sich die einzelnen Protonen der Phosphorsäure stark in ihren Reakti vi täten und Aciditäten unterscheiden. So sind die Dissoziationskonstanten der Phosphorsäure K₁ = 1,1 10⁻², K₂ = 1,2 10⁻⁷, K₃ = 1,8 10⁻¹². Dies zeigt, daß nach Absättigung der primären Säuregruppe die sekundäre Phosphatgruppe bei Reaktionen mit schwachen Basen neutralisiert werden wird.

Es zeigte sich überraschenderweise, daß Schäume mit wesentlich günstigeren Eigenschaften entstehen, wenn ein gleichsam elastisches Gerüst durch die Absättigung der primären und sekundären Wasserstoffe der Phosphorsäure gegeben ist und wenn ein relativ hoher Füllstoffanteil in das Gerüst eingebaut ist, sodaß der Bindemittelanteil (Phosphatanteil) sich zwischen 10 und 40 Prozent bewegt, als wenn alle drei sauren Phosphatvalenzen anscheinend in einer relativ spröden Form räumlich vernetzt sind.

Die tertiäre Säuregruppe der Phosphorsäure kann durch zusätzliche basische Bestandteile, welche langsam reagieren, etwa besonders umweltfreundlich in Form eines gemahlenen basischen Gesteines, welches auch aufgrund des gemeinsamen Einsatzes mit dem Treibmittel auch Carbonate enthalten kann, neutralisiert werden.

Als Treibmittel sind alle unter Betriebsbedingungen gasabspaltenden oder gasentwikkelnden Substanzen, wie zum Bei spiel Metalle, welche im sauren Milieu Wasserstoffgas entwikkeln, oder auch andere beispielsweise in US 3 330 675 angeführte Verbindungen, anzusehen. Die Dauer des Gasentwicklungsprozesses soll sich im Bereich von 3s bis 10 min, bevorzugt 5s bis 5 min bewegen und auf den Abbindeprozeß, der sich in der Regel zwischen 10 s bis 60 min, bevorzugt 20s bis 10 min, bewegt, abgestimmt sein. Als besonders günstig werden aber vor allem Carbonate angewendet, wobei eine Vielzahl von Carbonaten, wie zum Beispiel von Zink, Calzium, Strontium, Barium, Magnesium, Eisen, Nickel, etc. oder auch von basischen Carbonaten, wie zum Beispiel von Zink, Magnesium, Eisen, Mangan, Nickel, Kupfer, etc. in Frage kommen. Auch Alkalicarbonate und Ammoncarbonat oder deren Bicarbonate sind einsetzbar. Auch carbonathältige Gesteinsmehle können verwendet werden. Diese Treibmittel können alleine oder in Kombination miteinander, beispielsweise als Feststoff, als Suspension, aber auch als Lösung (bei Verwendung von wasserlöslichen Carbonaten) eingesetzt werden.

Die Menge an Protonen mit einer entsprechenden Acidität, vor allem der Gehalt an sekundären Phosphorsäureprotonen, im Vergleich zum einzusetzenden Metallcarbonat und Metalloxid ist wesentlich. Es kann zusätzlich zum sauren Metallcarbonat noch Säure, beispielsweise Phosphorsäure oder Schwefelsäure, zugesetzt werden, wobei die Säuremengen je nach den pK Werten ihrer Protonen berücksichtigt werden müssen. Die Gasentwicklung und ihre Gesch wi ndi gkeit ist bei den Carbonaten abhängig vom pH Wert, welcher im Härtungs/Schäumprozeß durch die Reaktivität und Menge des Härters im Vergleich zur Säuremenge bestimmt wird. Hier ist eine definierte Säurekapazität und ein definierter Ausgangs pH Wert wichtig. Die Menge an zu neutralisierender Säure ist auch für die Exothermie des Prozesses von Bedeutung.

Es hat sich bei den hier durchgeführten Untersuchungen herausgestellt, daß es für die Erzielung der angegebenen Schaumcharakteristikas ganz wesentlich ist die Säureprotonen der Phosphorsäure stufenweise zu neutralisieren, wobei relativ genau die sekundären Protonen der Phosphorsäure zur Erzielung eines festen Schaumes neutralisiert werden müssen. Es empfiehlt sich oft sogar, aufgrund des für die Phosphorsäure charakteristischen Puffergleichgewichtes, welches bei fast vollständiger Neutralisation eines Puffersystems fast zur Gänze zu der einen (basischen) Komponente verschoben ist, etwas unter dem berechneten Äquivalentwert der zur Neutralisation der sekundären Phosphatgruppe, zu bleiben, um ein Ausblühen des Härters und von nicht umgesetztem Carbonat zu vermeiden.

Um definierte Ausgangsbedingungen einzustellen empfiehlt es sich die Viskosität der Ausgangsmischungen (Komponente (A) (zum Beispiel mit einer Raumtemperaturviskosität im Bereich von 2000 mPa.s bis 80 000 mPa.s, bevorzugt 6500 mPa.s bis 60 000 mPa.s) und beispielsweise auch von Komponente (B)) in günstiger Weise durch das Zumischen von Füllstoffen einzustellen, wobei je nach Füllstoffart ein Füllstoffgehalt zwischen 30 und 200 Gewichtsprozent bezogen auf den flüssigen Bestandteil (z.B. Wasser oder die Phosphatlösung) günstig ist. Die Anfangsviskosität ist entscheidend für die Struktur des Schaumes. So schäumt eine stark viskose Flüssigkeit nur durch große Gasmengen (Druck) und gibt eher festen Schaum, eine sehr niedrigviskose Flüssigkeit gibt unter gleichen Bedingungen einen sehr leichten Schaum, der dann als solcher zum Erstarren gebracht werden muß, wobei diese Schäume eine starke Neigung besitzen große Gasblasen, welche leicht zerplatzen, zu bilden, sodaß diese Schäume ohne im sauren Milieu stabilisierenden Netzmittel/Schaumstabilisatorzusatz oft relativ rasch an der Luft in sich zusammenfallen.

Weiters können langsam reagierende Stoffe, die vorzugsweise in einem Füllstoff enthalten sein können, einer oder beiden Komponenten zugegeben werden, sodaß die restlichen sauren Phosphatgruppen nach dem ersten rasch ablaufenden Neutralisationsprozeß in einem langsamen Reifeprozeß neutralisiert werden.

Im folgenden wurde nur gefunden, daß es bei diesen Schäumen mit Hilfe ganz bestimmter Füllstoffreaktivitäten und Füllstoffarten, wobei sich plättchenförmige Füllstoffe (bevorzugt gemahlenen Glimmer oder Schiefer, insbesonders mit der Teilchengröße unter 100µ oder 45µ, oder auch Füllstoffe der Korngröße bis 2mm, ebenfalls bevorzugt in Plättchenform) als günstig erwiesen haben, möglich ist, bestimmte für die Schaumentstehung vorteilhafte rheologischen Eigenschaften und letztendlich auch gute Schaumfestigkeiten zu erzielen. Üblicherweise werden Füllstoffe mit der bevorzugten Teilchengröße unter 200µ oder 100µ, insbesondere 45µ verwendet, wie zum Beispiel Bauxit, Quarz, Aluminumoxid, Feldspat, Wollastonit, Mullit oder gebrannten Magnesit. Hydrophobierte, zelluläre Materialien, wie zum Beispiel hydrophobierter Perlit, die in der Regel wesentlich größere Teilchendurchmesser besitzen, sind als Füllstoffe ausgeschlossen.

Durch Art und Menge der Füllstoffe kann das Problem der Rißbeständigkeit bei Trocknung von großen Flächen beeinflußt werden. Hier ist der Einsatz von Fasern, zum Beispiel Zellstofffasern oder auch anderen organischen und/oder anorganischen feinen Fasern, wie Alumosilikatfasern oder Glasfasern, oder Wollastonit, in Betracht zu ziehen. Es können aber auch Gewebe und/oder anderes Verstärkungs- oder Armierungsmaterial, beispielsweise Gitter, Glasnetze, Metallgewebe, etc. verwendet werden.

Ein Wassergehalt von 15% bis 45% ist wichtig für die Viskosität und die Stabilität des erhaltenen Schaumes. Bei zuviel Wasser wird die Mischung nicht hart und der Schaum fällt zusammen. Die maximal akzeptierbaren Wasserwerte sind von der Natur des Füllstoffes oder auch Härters (zum Beispiel bei der Verwendung von sehr feinen Härterpulvern mit großen Oberflächen) abhängig. Die Abhängigkeit von den verwendeten Systembäusteinen ist am besten am Vergleich von Beispiel 1 mit Beispiel 4 zu erkennen. In Beispiel 1 ergeben 30% Wassergehalt im Gesamtsystem noch einen stabilen Schaum (100 g mit 25% Wasser in der A-Komponente (25g) und dazu 33 g B-Komponente mit etwa 45% Wasser (14,8g)= 133g Mischung mit 39,8 g Wasser = 29,96%). Bei Beispiel 4 ergeben 24% Wasser keinen stabilen Schaum mehr (100 g mit 21,2% Wasser in der A-Komponente (21,2g) und dazu 34 g B-Komponente mit etwa 31,25% Wasser (10,6g) = 134g Mischung mit 31,8 g Wasser = 23,73%). Bei diesem Ansatz ist ist ein Schaum erst mit 17,2 % Wasser stabil. In manchen Fällen kann es vorteilhaft sein, Verflüssiger zur Viskositätserniedrigung und/oder Erniedrigung des Wassergehaltes zuzusetzen.

Es hat sich gezeigt, daß in Abhängigkeit vom verwendeten Füllstoff und insbesondere von der gewünschten Schaumdichte der Zusatz von im sauren Milieu aktiven Netzmitteln und/ oder Schaumstabilisatoren und/oder Thixotropierungsmitteln günstig sein kann.

Es kann unter gegebenen Umständen vorteilhaft sein, die vorgemischten Komponenten als trockene oder in Wasser angeteigte Zwischenprodukte zu lagern und für eine spätere Verwendung bereit zu halten, wobei die Mischungsverhältnisse dann in einer derartigen Weise eingestellt werden müssen, daß überwiegend die sekundären Protonen der Phosphatgruppen neutralisiert werden.

### Prozeßparameter

Die Abbindegeschwindigkeit kann durch die Auswahl der Härtersubstanzen, ob Oxid, Hydroxid, Salz oder einer Mischung aus diversen basischen Substanzen eingestellt werden. Die Abbindegeschwindigkeit ist im Zusammenhang mit der notwendigen Start- oder Mischzeit und der Geschwindigkeit des Mischens, sowie der parallel dazu ablaufenden Steigzeit, zu sehen. Diese Größen werden am besten, mit den wie beim Polyurethanschaum üblichen Begriffen für die Verschäumung im Labor beschrieben (G.W.Becker/D.Braun in Kunststoffhandbuch 7 Polyurethan S.353 ISBN 3-446-13614-2) und definiert:
*Startzeit* (einschließlich Rührzeit): Beginn der Vermischung bis zum Beginn des Schäumens (mit einer Rührzeit günstigerweise im Bereich von 0,1s oder 2s bis 60s.)
*Steigzeit*: Beginn der Vermischung bis zum beendeten Steigprozeß (Schäumprozeß)
*Abbindezeit* Beginn der Vermischung bis zur Klebfreiheit der Schaumstoffhaut Zusätzlich erwies es sich als günstig und anschaulich eine
*Druckfestigkeitszeit* zu definieren, in welcher das Schäumgerüst so weit ausgehärtet ist, daß es durch einen geringen Druck mit der Fingerkuppe nicht mehr eingedrückt werden kann. Diese Zeit erscheint vor allem bei langen Abbindezeiten, die alleine durch eine Lufttrocknung der Schaumoberfläche ohne Aushärtung ebenfalls klebfrei werden können, sinnvoll.

Wie leicht zu erkennen, werden diese Größen nicht nur durch die Natur des Härters, seine Menge und Reaktivität in Abhängigkeit von der Menge an freien Protonen und der vorliegenden Acidität stark beeinflußt, sondern auch durch den Viskositätsverlauf, welcher vom Wassergehalt und der Anfangsviskosität abhängt.

Stellt man eine Anfangsviskosität bei definiertem Wassergehalt nicht durch den Füllstoff, sondern wie bei den eingangs erwähnten Patenten durch das Neutralisieren der Phosphorsäure mit mehrwertigen Kationen ein, so verändert man damit aufgrund des Viskositätsanstieges auch die Aufnahmefähigkeit für Füllstoffe. Wie jedoch allgemein bekannt, ist der Füllstoffgehalt (abgestimmt mit dem Bindemittelgehalt) ein wesentlicher bestimmender Faktor für die physikalischen Endeigenschaften eines Produktes und sollte daher soweit als möglich ein frei verfügbarer Parameter bleiben.

Die Trocknung des Schaumes kann als langfristiger Prozeß bei Raumtemperatur als Ruhephase oder bei erhöhter Temperatur durch Einwirken von Warmluft und/oder Strahlungswärme, beispielsweise in einem Ofen erfolgen. Ein Entfernen des Wassers durch Microwellen oder durch Hochfrequenz ist vor allem bei großen Schaumdicken empfehlenswert.

### Schaumeigenschaften

Ein wesentlicher Punkt ist die mechanische Festigkeit, die in entscheidendem Maß durch die Dichte bestimmt wird. Es zeigte sich, daß man bei Dichten von über 0,15 g/cm³ in der Regel genügend druckfesten Schaum für eine Anwendung im täglichen Gebrauch, zum Beispiel als Brandschutzmaterial, erhält. Die Homogenität des Schaumes ist, vor allem bei großflächigen Anwendungen, wesentlich. Biegefestigkeit und Rißbeständigkeit kann durch Faserzusatz (beispielsweise von Zellstofffasern oder Mineralfasern) oder durch Einsatz von Füllstoffen mit Plättchen- oder Stäbchenstruktur (Wollastonit) verbessert werden.

Die Temperaturbeständigkeit wird stark durch die Natur des Füllstoffes beeinflußt.

Die Wärmeleitfähigkeit ist im wesentlichen ebenfalls eine Funktion der Dichte, wobei aber auch Offenzelligkeit oder Geschlossenzelligkeit des Schaumes die Wärmeleitung beeinflussen. Die Werte dieser Schäume liegen je nach Dichte (0,1 - 0,9 g/cm³) in den Bereichen 0,05 - 0,17 W/m°K.

Eine rasch einstellbare Härtungsgeschwindigkeit, also die rasche Verfestigung des Schaumes bei entsprechenden mechanischen Eigenschaften, ist für bestimmte Anwendungsfälle entscheidend, so beispielsweise bei Sprühauftrag der Mischung, um ein lang anhaltendes Abfließen des Schaumes beim Aufträgen auf eine stehende Fläche zu verhindern.

Die Wasserfestigkeit ist durch eine Vielzahl von Faktoren beeinflußbar. Sie wird durch die langsame Nachreaktion und Aushärtung im Verlauf von Tagen oder durch Erhitzung und die damit erzielte Entwässerung des Schaumes wesentlich verbessert.

Es ist weiters möglich hydrophobierende Substanzen zuzusetzen oder spezifische Härter zu verwenden, welche ebenfalls die Wasserfestigkeit verbessern.

Die Trocknungstemperatur des Schaumes ist ebenfalls ein wesentlicher Faktor für seine Wasserfestigkeit. So ist bekannt, daß beispielsweise Aluminiummonophosphat bis zu einer Temperatur von 140°C vollkommen wasserlöslich bleibt. Erst bei 400°C ist die Umwandlung in eine wasserfeste Phase vollkommen abgeschlossen.

Neben einer hohen Temperaturbeständigkeit werden von Isolierstoffen oft auch Korrosionschutzeigenschaften gewünscht. Sie sind aufgrund der Phosphätierungseigenschaften der Schaummischungen in hohem Maße gegeben.

### Beispiele

In den nachfolgenden Beispielen wird die Erfindung näher erläutert. Die Komponente A besteht üblicherweise aus Wasser (15-60 Gew%), Phosphatsalzen (beispielsweise Monoaluminiumphosphat) (10-40 Gew.%), freie Säure (0-8 Gew.%), Füllstoff (kubisch, plättchen-, stäbchen- oder faserförmig) (3-66 Gew.%), fallweise organischen Zusatzstoffen und Hilfsmitteln (0-10(5) Gew.%) als Restmenge.
Die Komponente B wird als Pulver, angeteigt oder als wässrige Suspension verwendet. Sie besteht somit fallweise aus Wasser (0-80 Gew.%, vorzugsweise 30-80 Gew.%), Härter (0-95 Gew. %), Treibmittel (härtend und nicht härtend) (5-100 Gew.%), Füllstoff (kubisch, plättchen-, stäbchen- oder faserförmig) (0-70 Gew.%), organischen Zusatzstoffen und Hilfsmitteln (0-(5)10%) als Restmenge.
Beiden Komponenten können je nach Bedarf noch weitere Stoffe, wie Verstärkungsmittel (z.B.: Fasern), in Mengen von 0-20 Gew.% zugesetzt werden.
Die Bestandteile der Komponenten A und B werden als Komponenten homogen gemischt. Die Komponenten werden dann in genau eingestellten Mischungsverhältnissen rasch homogen zu der härtenden schäumenden Masse vermischt. Die im Schäumen begriffene Masse kann in Formen gegossen oder auf Flächen aufgebracht werden.

Das Mischungsverhältnis der beiden Komponenten A : B kann sich je nach den eingesetzten Mengenverhältnissen der Rohstoffe üblicherweise im Bereich von A : B = 1 Teil : 0,05 (oder 0,1) bis 3 (oder 2) Teilen bewegen. Erfindungsgemäß werden dabei die Äquivalentverhältrisse der reagierenden Bestandteile in der Form berücksichtigt, daß überwiegend die sekundären Protonen der Phosphatgruppen abgesättigt werden.

### Eingesetzte Rohstoffe:

### Als Füllstoffe:

a) schwarzes Gesteinsmehl (Typ I) (≤200µ, 93% unter 90µ) 38% Glimmer, 18% Chlorit, 19% Quarz, 21%Albit, 4% Calcit (plättchenförmig)
b) weißes Gesteinsmehl (Typ II) (≤200µ) 34% Quarz, 33% Chlorit und 33% Glimmer
c) Glimmerpulver (≤30µ),
d) Quarzmehl (≤12µ),
e) Wollastonit (Nyad G von Nyco Minerals, Inc.)

### Als Härter:

Calciumoxid, Calciumhydroxid, Magnesiumoxid (Typ I, (≤150µ)), Magnesiumoxid (Typ II, extraleicht), Magnesiumoxid (Typ III, Maglite), Magnesiumhydroxid, Zinkoxid (Zinkweiß Rotsiegel), Portlandzement 275
Als *Phospatlösung:*

Fabutit 705 (50%ige wäßr. Lösung von Al(H₂PO₄)₃ (Fa. Budenheim), 75%ige Phosphorsäure,
Als *Treibmittel*:
basisches Magnesiumcarbonat: [Mg(MgCO₃)₄](OH₂).5H₂O (Fa. Merck), Omyacarb 15 (≤100µ), Omyacarb 40 (≤200µ), Omyacarb 130 (≤400µ) (Fa. Omya)

### Beispiel 1 . Untersuchung des Einflußes der Härtermenge mit Hilfe eines kontinuierlichen Dosier- und Mischaggregates.

*Komponente (A):* 100 Teile 50%ige Lösung von Aluminiummonophosphat und 100 Teile des Gesteinsmehles (Typ I) mit einer nach Brookfield gemessenen Viskosität von 18 000 mPa.s.
*Komponente (B):* 90 Teile MgO (Typ I) + 18 Teile basisches MgCO₃ +80 Teile Gesteinsmehl (Typ I) in 155 Teilen Wasser.

Die beiden Komponenten wurden in den in der Tabelle angegebenen Verhältnissen miteinander kontinuierlich gemischt und folgende Schaumdaten durch Einfüllen der Mischungen in Papierbecher erhalten: (Der Äquivalenzpunkt für das sekundäre Proton liegt bei 16,5 Teilen Komponente (B) zu 100 Teilen (A)).

| Mischungsverhältnis (B): (A) | Startzeit | Steigzeit | Abbindezeit | Druckfest | Dichte g/cm³ | Ausblühung des Härters |
|---|---|---|---|---|---|---|
| 8 T : 100T | 6s | 58s | 3min15s | bleibt feucht | | nein |
| 12 T : 100T | 5s | 1min20s | 3min30s | bleibt feucht | 0,56 | nein |
| 14 T : 100T | 4s | 1min20s | 2min50s | bleibt feucht | 0,52 | nein |
| 16,5 T : 100T | 4s | 1min20s | 1min40s | 2'10s | 0,40 | nein |
| 18 T : 100T | 3,5s | 48s | 53s | 1'10s | 0,33 | ja |
| 21 T : 100T | 3s | 32s | 40s | 45s | 0,33 | ja |
| 33 T: 100T* | 3s | 32s | 40s | 50s | 0,45 | ja |

| | | | | | | |
|---|---|---|---|---|---|---|
| *(Handmischung) | | | | | | |

Die erhaltenen Ergebnisse bestätigen, daß die Neutralisation der sekundären Phosphatgruppe (bei 16,5 Teile Komponente (B) : 100 Teile Komponente (A)) durch den Härter für die Schaumstabilität entscheidend ist. Unter diesem Molverhältnis bleiben die Schäume bei dem gegebenen Wassergehalt über Stunden feucht und werden nur durch Lufttrocknung hart. In diesem Zeitraum besitzen sie eine Neigung zum Zusammenfallen der Schaumstruktur. Über diesem Molverhältnis bleibt der zusätzliche Härter, wie seine Ausblühungen zeigen, zum Großteil unumgesetzt.

### Beispiel 2. Einfluß der Natur des Härters und des Treibmittels

*Komponente (A):* 100 Teile 50%ige Lösung von Alumimummonophosphat und 100 Teile des Gesteinsmehles (Typ II)
*Komponente (B)* (gemäß der Standardmischung von Beispiel 1): 90 Teile MgO (Typ I)[oder eine entsprechende äquivalente Mengen an anderen Härtern] + 18 Teile bas. MgCO₃[oder entsprechende äquivalente Mengen an anderen Carbonaten] + 80 Teile Gesteinsmehl (Typ II) in 155 Teilen Wasser) (Bei den Versuchen h, n und o wurde die (B)-Komponente in Pulverform, ohne Wasserzusatz zugegeben).

Komponente (A) und Komponente (B) werden mit dem Mischungsverhältnis 100 : 16,5, welches einer kompletten Neutralisation des sekundären Phosphorsäureprotons entspricht, ― durch Vermischen der Komponenten in einem Becher mit Hilfe eines schnell laufenden Rührwerkes vermischt. Als Rührzeit waren um eine ausreichende Durchmischung zu erreichen 10 Sekunden notwendig. (Dies führt bei kurzen Startzeiten der Mischungen zu einer starken Beeinträchtigung der Dichte (Zerschlagen des Schaumes). Weiters ist die Startzeit in der Regel durch die 10 Sekunden dauernde Rührzeit im Becher nicht bestimmbar.

| Komponente (B) Härter/Carbonat | % Wasser im Schaum*) | Steigzeit | Abbindezeit | Druckfest | Dichte g/cm³ |
|---|---|---|---|---|---|
| a) MgO(I)/bas.MgC0₃ | 27,9% | 95s | 2min35s | 2min55s | 0,45 |
| b) MgO(I)/bas.MgC0₃ | 28,7% | 90s | 3min10s | 3min50s | 0,43 |
| c) MgO(I)/bas.MgC0₃ | 25,7% **) | 70s | 1min23s | 1min35s | 0.56 |
| d) MgO(Maglite)/bas.MgC0₃ | 27,9% | 10s | 5min40s | ― | 0,68 |
| e) MgO(e.leicht)/bas.MgC0₃ | 34,9% | 8s | 8s | 8s | 1,30 |
| f) Mg(0H)₂/bas.MgC0₃ | 28,8% | 25s | 42s | 50s | 0,87 |
| g) Ca(0H)₂/bas.MgC0₃ | 28,7% | 40s | 2min10s | 3min30s | 1,29 |
| h) festes Ca0/bas.MgC0₃ | 22,9% | 45s | 1min 5s | ∼ 7min | 0,82 |
| schwierige Vermischung unter Versuchsbedingungen / ungleichmäßige Verteilung | | | | | |
| i) MgO(I)/Omyacarb 15 | 27,9% | 100s | 2min00s | 2min30s | 0,56 |
| k) MgO(I)/Omyacarb 40 | 27,9% | 60s | 2min20s | 3min40s | 0,70 |
| l) MgO(I)/Omyacarb 130 | 27,9% | 80s | 2min40s | 2min50s | 1,09 |
| m) MgO(I)/NH₄HCO₃ Lösg | 28,5% | ― | 2min50s | 3min30s | 1,00 |
| n) festes MgO(I)/NH₄HCO₃ | 22,9% | 85s | 2min | 3min | 0,90 |
| o) festes MgO(I)/bas.MgC0₃ | 22,9% | ― | ― | ― | ― |
| Vermischung unter Versuchbedingungen unmöglich | | | | | |

| | | | | | |
|---|---|---|---|---|---|
| *Bemerkungen:* *) je nach der verwendeten Härter/Carbonat-Mischung (vor allem in Abhängigkeit von der Feinheit der verwendeten Rohstoffe) waren unterschiedliche Wassermengen nötig um eine homogene Verteilung zu erzielen. | | | | | |
| **) Bei Mischung c) wurde die Komponente (A) aus 100 Teilen Phosphatlösung und 120 Teilen Füllstoff hergestellt, wodurch der Wassergehalt in der Gesamtmischung verringert wurde. ad m) Die wäßrige Lösung von Ammoncarbonat reagiert so rasch, daß die Startzeit und die Steigzeit zusammenfallen. Es bleibt im Becher keine Zeit für die Durchmischung. ad o) Ein rasches Einrühren der gesamten Menge des feinpulvrigen festen basischen Magnesiumcarbonates war unter den gegebenen Versuchsbedingungen in einer homogenen Art und Weise nicht möglich, da sofort eine knöllchenförmige Zusammenballung der Mischung auftrat und sehr inhomogene Massen entstanden. | | | | | |

### Ergebnisse:

Diese Werte zeigen die Bedeutung der Natur des Härters und des Treibmittels für die bei diskontinuierlicher Mischung im Becher zu erzielende Schaumdichte und die einstellbaren Schäumungspaparameter bei einer gegebenen (A) Komponente. Weiters ist ersichtlich, daß der Wassergehalt (dessen maximaler Wert von den einzelnen Zusatzstoffen abhängig ist) für die Abbindezeit (bis eine klebfreie Schaumoberfläche auftritt) wesentlich ist, wobei zu große Wassermengen die Entstehung eines stabilen Schaumes verhindern können.

Man erkennt aus diesen Versuchen, daß bei gegebener (A) Komponentenmischung Startzeit, Steigzeit und Abbindezeit a) durch Art und b) durch Teilchengröße (sie bestimmt deren Auflösungsgeschwindigkeit) von Härter und Treibmittel beeinflußt werden. Neben der generellen Bedeutung des Wassergehaltes ist dieser aber vor allem für die Abbindezeit von Wichtigkeit.
So bewirkt eine Erhöhung des Wassergehaltes eine Verlängerung der Abbindezeit:
c) : a) : b) = 25,7% : 27,9% : 28,7% Wasser = 1'23" : 2'35"' : 3'10" Abbindezeit.

### Beispiel 3. Versuch mit Glimmer, als plättchenförmigen Füllstoff einer Zinkphosphatlösung, hergestellt aus ZnO und 75% H₃P0₄, und ZnO/basisches Magnesiumcarbonat als Härter/Treibmittelkombination

In 11,8 g 75 %ige Phosphorsäure werden 3 g ZnO aufgelöst und 7 g Glimmerpulver eingerührt (Komponente (A)). Zu dieser Mischung werden 3,6 g Glimmerpulver mit 2,9 g ZnO und 0,5g basischem Magnesiumcarbonat als Feststoffe eingerührt (Komponente (B)). Es entsteht ein feiner Schaum der Dichte 0,30 g/cm³ , der etwa 30 Minuten zur Aushärtung benötigt.

*Ergebnisse:* Schaumstabilität ist sehr groß, Schaum bleibt aufgrund der langsamen ZnO Härtung (löst sich relativ langsam in der 75%igen Phosphorsäure auf) lange feucht, aber er ist sehr fein und stabil wegen des Glimmers. Zur Entwässerung empfiehlt sich nach etwa sechs Stunden eine Trocknung des Schaumes bei erhöhter Temperatur.

### Beispiel 4. Versuch mit kubischen Füllstoffen (Quarzmehl) und Zement/Kreide als Härter/Treibmittelkombination

*Komponente (A)*: 100 Teile Monoaluminiumphosphatlösung werden mit 120 Teilen Quarzmehl S 600 gemischt. Weiters wurde eine geringe Menge eines Netzmittels, welches im sauren Bereich schäumen muß, zugesetzt.
*Komponente (B):* 5 Teile Omyacarb 15 und 25 Teile Portlandzement 275.

Durch rasches Vermischen der Komponenten in den angegebenen Mengenverhältnissen erhält man einen festen Schaum mit 17,2% Wasser und der Dichte 0,85 g/cm³. Die Startzeit beträgt 3s, die Steigzeit 70s und die Abbindezeit 2min10s.

(Bei weiterem Zusatz von 25 Teilen Wasser und 25 Teilen Quarzmehl zur Komponente (B) bleibt der Schaum weich und fällt ein. Man hat in dieser Mischung 23,7% Wasser [100 g mit 21,2% Wasser in der Komponente (A) (21,2g) und dazu 34 g Komponente (B) mit 31,25% Wasser (10,6g) = 134g Mischung mit 31,8 g Wasser = 23,7%].)

### Beispiel 5. Beschichtungsbeispiel

Eine Mischung nach Beispiel 1 mit dem Mischungsverhältnis der Komponenten (A) : (B) = 100 : 16,5, der 2% kurzfaserige Zellstoffasern zugesetzt wurden, wurde auf ein gereinigtes und entfettetes Eisenblech mit Hilfe von Preßluft und einer Spritzpistole mit einer Schichtdicke von 10 mm durch zweimaligen Spritzauftrag aufgetragen. Der Schaum mit der Dichte 0,49 g/cm³ hatte eine sehr gute Haftung auf dem Eisenblech.

### Beispiel 6. Herstellung eines leichten Schaumes mit der Dichte unter 0,10 g/cm³ unter Verwendung von Calziumcarbonat als Härter und Treibmittel. Aufzeigen der Bedeutung der Verwendung eines im sauren Milieus schäumenden Netzmittels und der Mischbedingungen.

*Komponente (A):* 100 Teile Aluminiummonophosphat, 90 Teile Gesteinsmehl (Typ I) und 10 Teile Wollastonit; fallweise mit oder ohne Netzmittel (als Schaumstabilisator).

*Komponente (B):* Suspensionen der angegebenen Kreidetypen in gleichen Gewichtsteilen Wasser
(B₁) Omyacarb 15 (mittlere Korngröße 13µ, unter 10 µ: etwa 45%)
(B₂) Omyacarb 130 (mittlere Korngröße 160µ, unter 50µ: 5%)
(B₃) Ein Verschnitt 1:1 von B₁ und B₂.

*Durchführung*: Sofort nach der Herstellung der Komponente (A) wurden davon 50 g mit jeweils 14 g der Komponente (B) versetzt und unter konstant gehaltenen Bedingungen 5 s in einem 300 ml Papierbecher intensiv mit einem schnell laufenden Rührer gemischt:

| *Ergebnisse:* | | | | |
|---|---|---|---|---|
| Komp. (A) gemischt mit | (B₁) | (B₂) | (B₃) | (B₁),(B₂),(B₃) |
| Netzmittelzugabe | ja | ja | ja | nein |
| Steigzeit | 1min55s | ∼30 min | 9 min | *) |
| Abbindezeit | 2min 15s | > 60 min | > 60 min | *) |
| Dichte | 0,09 g/cm³ | fällt ein | fällt ein | fällt ein |

Man erhält nur mit Omyacarb 15 (B₁) und Netzmittelzusatz eine gleichförmig geschäumte, erstarrte Masse. Ohne rasch reagierenden Feinanteil des Kreidepulvers (Komponente (B₂)) oder mit zu wenig Feinanteil (Komponente (B₃)) wird trotz Netzmittelzusatz kein stabiler Schaum erhalten. Ohne Netzmittelzusatz ist es unter den Versuchsbedingungen nicht möglich gewesen einen stabilen, leichten Schaum zu erhalten, da sich große, aufplatzende Blasen bilden.

Ersetzt man den Wollastonit, der neben seinen mechanisch verstärkenden Eigenschaften auch als langsamer Härter reagiert, in Komponente (B₁) durch Gesteinsmehl (Typ I), so bleiben Dichte (0,08 g/cm³) und Steigzeit in etwa gleich, die Abbindezeit verlängerte sich auf 3min30s.

Diese Versuche zeigen auch hier die Bedeutung der Abstimmung der Reaktivitäten der einzelnen Substanzfraktionen um einen festen Schaum mit einem niedrigen spezifischen Gewicht zu erhalten. Von großer Bedeutung sind allerdings auch die Mischbedingungen.

*Einfluß der Mischbedingungen*: Der Rührprozeß wesentlich für den erhaltenen Schaum. Ist die Rührzeit länger als die Startzeit, so wirkt der in der Rührzeit umgesetzte Anteil (Feinanteil) des Carbonates großteils als Härten da der entstehende Schaum wieder zerschlagen wird.
1. 50g Komponente (A) mit (B₄): 7g Omyacarb 15 in 7g Wasser verrührt
2. 50g Komponente (A) mit (B₅): 6 g Omyacarb 15 und 0,4 g MgO (Typ I) in 6,4g Wasser verrührt
3. 50g Komponente (A) mit (B₆): 5 g Omyacarb 15 und 0,8 g MgO (Typ I) in 5,8g Wasser verrührt

| | | Rührzeit | Steigzeit | Abbindezeit | Dichte |
|---|---|---|---|---|---|
| 1. | (B₄) | 7 s | 2min 0s | 2min 20s | 0,11 g/cm³ |
| 2. | (B₅) | 3 s | 2min 0s | 3min 20s | 0,08 g/cm³ |
| 3. | (B₆) | 3 s | 2min 10s | 5min | 0,10 g/cm³ |

Unter den angegebenen Versuchsbedingungen gibt somit ein 7s lang gerührtes reines Kreidehärter-Treibmittel-System (Komponente (B₄)) einen etwas dichteren Schaum, als wenn man etwa 30% der Kreide durch MgO (Typ I) ersetzt und nur 3 s lang rührt.

## Patentansprüche

1. Verfahren zur Herstellung einer, zumindest überwiegend anorganischen, geschäumten Masse oder eines Formteils durch rasche Vermischung einer
Komponente (A), enthaltend eine saure wässrige Lösung von überwiegend mehrwertigen, bevorzugt zwei- oder dreiwertigen Kationen und Phosphorsäure zur Bildung eines Phosphates, wobei jeweils im Mittel 0,8 bis 1,75 Protonen der dreibasigen Phosphorsäuremoleküle durch die Kationen neutralisiert sind, in welcher Lösung ein oder mehrere Arten eines körnigen, plättchen- oder pulverförmigen Füllstoffes fein verteilt sind, wobei eine Raumtemperatur-Viskosität im Bereich von 2 000 mPa.s bis 80 000 mPa.s, vorteilhaft durch Wahl von Art, Konsistenz und/oder Menge des Füllstoffes und/oder ihres Wassergehaltes eingestellt wird mit einer
Komponente (B), enthaltend
a) ein Oxid, Hydroxid oder ein mehrwertiges Salz einer schwachen Säure als Härter und
b) ein gegebenenfalls teilweise auch als Härter wirkendes Treibmittel; wie ein Carbonat, das unter Härtungsbedingungen ein Gas, bevorzugt CO₂, entwickelt, wobei der innerhalb einer Zeit von 10 s bis 60 min reagierende Härter in einer derartigen Menge eingesetzt wird, daß er überwiegend die sekundären Phosphorsäuregruppen absättigt und die Komponente (B) bevorzugt angeteigt oder als wässrige Suspension vorliegt und wobei, vorteilhaft durch Wahl von Art, Konsistenz und/oder Menge des Treibmittels die Dauer des Gasentwicklungsprozesses (Steigzeit) im Bereich von 3 s bis 10 min und der längerdauernde Abbindeprozeß (Abbindezeit), vorteilhaft durch Wahl von Art, Konsistenz und/oder Menge der härtenden Substanzen im Bereich von 10 s bis 60 min eingestellt wird
und durch Einbringen der Mischung aus den Komponenten (A) und (B), bei welchen hydrophobierte, zelluläre Materialien als Füllstoffe ausgeschlossen sind, in einen Raum oder auf eine Unterlage, in dem bzw. auf der das Schäumen und Abbinden der gemischten Masse stattfindet.

2. Verfahren nach Anspruch 1, dadurch gekennzeichnet, daß die Raumtemperaturviskosität der Komponente (A) im Bereich von 6 500 mPa.s bis 60 000 mPa.s eingestellt wird.

3. Verfahren nach Anspruch 1 oder 2, dadurch gekennzeichnet, daß die Dauer des Gasentwicklungsprozesses (Steigzeit) im Bereich von 5s bis 5 min eingestellt wird.

4. Verfahren nach einem der Ansprüche 1 bis 3, dadurch gekennzeichnet, daß der Abbindeprozeß (Abbindezeit) im Bereich von 20 s bis 10 min eingestellt wird.

5. Verfahren nach einem der Ansprüche 1 bis 4, dadurch gekennzeichnet, daß die restlichen sauren Phosphatgruppen durch, vorzugsweise in einem Füllstoff enthaltene, langsam reagierende Zusätze in einer oder beiden Komponenten in einem langsamen Reifeprozeß neutralisiert werden.

6. Verfahren nach einem der Ansprüche 1 bis 5, dadurch gekennzeichnet, daß die beiden Komponenten (A) und (B) durch einen kontinuierlichen Prozeß mit einer Rührzeit im Bereich von 0,1 s bis 60 s gemischt werden.

7. Verfahren nach einem der Ansprüche 1 bis 5, dadurch gekennzeichnet, daß die bei den Komponenten (A) und (B) durch einen kontinuierlichen Prozeß mit einer Rührzeit im Bereich von 2 s bis 60 s gemischt werden.

8. Verfahren nach einem der Ansprüche 1 bis 7, dadurch gekennzeichnet, daß Komponente (A) und/oder Komponente (B) einen Füllstoff mit der bevorzugten Teilchengröße unter 200 µ, vorzugsweise unter 100 µ, insbesondere unter 45 µ, vorzugsweise Bauxit, Quarz, Aluminiumoxid, Feldspat, Wollastonit, Mullit oder gebrannten Magnesit und/oder zumindest teilweise einen Füllstoff mit Plättchenstruktur mit der Teilchengröße bevorzugt unter 100 µ, insbesondere unter 45 µ, bevorzugt gemahlenen Glimmer oder Schiefer enthält.

9. Verfahren nach einem der Ansprüche 1 bis 8, dadurch gekennzeichnet, daß der Härteranteil der Komponente (B) ein im sauren Bereich unter Normalbedingungen reaktives mehrwertiges Metalloxid, insbesondere Magnesiumoxid, Calziumoxid, Zinkoxid, Eisenoxid, Zirkoniumoxid und/oder ein mehrwertiges Metallhydroxid enthält, insbesondere Mg(0H)₂, Ca(OH)₂, Zn(0H)₂, Eisenhydroxid, Mn(0H)₂ und/oder einen hydraulisch abbindenden Zement und/oder ein basisches Gesteinsmehl und/oder ein Salz einer schwachen Säure, insbesondere ein Carbonat, enthält.

10. Verfahren nach einem der Ansprüche 1 bis 9, dadurch gekennzeichnet, daß das Treibmittel der Komponente (B) ein Carbonat oder basisches Carbonat eines mehrwertigen Metalles, insbesondere von Calzium, Magnesium und/oder Zink und/oder ein Alkalicarbonat oder Ammonhydrogencarbonat oder Ammoncarbonat und/oder carbonathältiges Gesteinsmehl ist.

11. Verfahren nach einem der Ansprüche 1 bis 10, dadurch gekennzeichnet, daß zumindet eine der Komponenten ein im sauren Milieu aktives Netzmittel und/oder ein im sauren Milieu aktiven Schaumstabilisator und/oder ein Thixotropierungsmittel und/oder einen Verflüssiger oder ein Hydrophobierungsmittel enthält.

12. Verfahren nach einem der Ansprüche 1 bis 11, dadurch gekennzeichnet, daß die Herstellung der geschäumten Masse als Formkörper oder durch Aufbringen auf eine Unterlage unter Einbeziehung organischer und/oder anorganischer Fasern, wie Zellstoffasern, Alumosilikatfasern, Glasfasern, und/oder Gewebe und/oder anderes Verstärkungs- oder Armierungsmaterial, beispielsweise Gitter, Gläsnetze, Metallgewebe, etc, erfolgt.

13. Verfahren nach den Ansprüchen 1 bis 12, dadurch gekennzeichnet, daß das Abbinden und Trocknen der geschäumten Masse unter Einwirkung von Warm luft, Strahlungswärme, Hochfrequenz oder Microwellenenergie erfolgt.

14. Ein Kit of parts, bestehend aus einer Bindemittelkomponente (A), enthaltend eine saure wässrige Lösung von überwiegend mehrwertigen, bevorzugt zwei- oder dreiwertigen Kationen und Phosphorsäure zur Bildung eines Phosphates, wobei jeweils im Mittel 0,8 bis 1,75 Protonen der dreibasigen Phosphorsäuremoleküle durch die Kationen neutralisiert sind, in welcher Lösung ein oder mehrere Arten eines körnigen, plättchen- oder pulverförmigen Füllstoffes fein verteilt sind, wobei eine Raumtemperatur-Viskosität im Bereich von 2000 mPa.s bis 80 000 mPa.s, bevorzugt aber im Bereich von 6500 mPa.s bis 60000 mPa.s, vorteilhaft durch Wahl von Art, Konsistenz und/oder Menge des Füllstoffes und/oder ihres Wassergehaltes eingestellt wird, wie verwendet in den Ansprüchen 1 bis 13, als vorgemischtes angeteigtes Stoffgemisch; sowie einer entsprechend zu dosierenden fallweise Füllstoff enthaltenden Treibmittel-Härterkomponente (B), wie verwendet in den Ansprüchen 1 bis 13, als vorgemischtes, trockenes oder in Wasser angeteigtes Stoffgemisch,
in solchen Mengenverhältnissen von Komponente (A) zu Komponente (B), daß bei der Vermischung der beiden Komponenten überwiegend die sekundären Protonen der Phosphate neutralisiert werden und wobei hydrophobierte zelluläre Materialien als Füllstoffe ausgeschlossen sind.

15. Formkörper, erhältlich durch das Verfahren gemäß den Ansprüchen 1 bis 13.

## Claims

1. Process for the preparation of an at least predominantly inorganic foamed composition or moulded part by the rapid mixing of a
component (A) containing an acid aqueous solution of predominantly polyvalent, preferably bivalent or threevalent, cations and phosphoric acid to form a phosphate, with in each case on average 0.8 to 1.75 protons of the threebasic phosphoric acid molecules being neutralized by the cations, in which solution there are finely dispersed one or more types of granular, lamellar or pulverulent filler, with a viscosity at room temperature within the range 2 000 mPa.s to 80 000 mPa.s being adjusted, advantageously by selecting the type, consistency and/or quantity of the filler and/or of the water content thereof,
with a
component (B) containing
a) as a hardener an oxide, hydroxide or a polyvalent salt of a weak acid and
b) a foaming agent, such as a carbonate which under hardening conditions generates a gas, preferably CO₂, which optionally also acts in part as hardener, with the hardener which reacts within 10 s to 60 min being utilised in a quantity such that it predominantly neutralizes the secondary phosphoric acid groups and the component (B) being preferably present as a paste or an aqueous suspension and with the duration of the gas generation process (rise time) being adjusted within the range 3 s to 10 min advantageously by selecting the type, consistency and/or quantity of the foaming agent, and the more protracted setting process (setting time) being adjusted within the range 10 s to 60 min, advantageously by selecting the type, consistency and/or quantity of the hardening substances,
and introducing the mixture of the components (A) and (B), from which hydrophobised, cellular materials are excluded as fillers, into a chamber or onto a substrate in or on which there take place the foaming and hardening of the mixed composition.

2. Process according to Claim 1, characterised in that the viscosity at room temperature of component (A) is adjusted within the range 6 500 mPa.s to 60 000 mPa.s.

3. Process according to Claim 1 or 2, characterised in that the duration of the foaming process (rise time) is adjusted within the range 5s to 5 min.

4. Process according to one of the Claims 1 to 3, characterised in that the hardening process (setting time) is adjusted within the range 20 s to 10 min.

5. Process according to one of the Claims 1 to 4, characterised in that the residual acidic phosphate groups are neutralized in a slow process of ripening by slow-reacting compounds preferably contained in a filler, in one or both components.

6. Process according to one of the Claims 1 to 5, characterised in that the two components (A) and (B) are mixed in a continuous process with a mixing time within the range 0.1 s to 60 s.

7. Process according to one of the Claims 1 to 5, characterised in that the two components (A) and (B) are mixed in a continuous process with a mixing time within the range 2 s to 60 s.

8. Process according to one of the Claims 1 to 7, characterised in that the component (A) and/or the component (B) contain(s) a filler with the preferred particle size of less than 200 µ, preferably less than 100 µ, in particular less than 45 µ, preferably bauxite, quartz, aluminum oxide, feldspar, wollastonite, mullite or calcined magnesite and/or at least in part a filler of lamellar structure of a particle size of preferably less than 100 µ, in particular less than 45 µ, preferably ground mica or slate.

9. Process according to one of the Claims 1 to 8, characterised in that the hardener constituent in the component (B) contains a polyvalent metal oxide which is reactive under normal conditions within the acid range, in particular magnesium oxide, calcium oxide, zinc oxide, iron oxide, zirconium oxide and/or a polyvalent metal hydroxide, in particular Mg(0H)₂, Ca(0H)₂, Zn(0H)₂, iron hydroxide, Mn(0H)₂ and/or a hydraulically setting cement and/or a basic rock powder and/or a salt of a weak acid, in particular a carbonate.

10. Process according to one of the Claims 1 to 9, characterised in that the foaming agent of the component (B) is a carbonate or basic carbonate of a polyvalent metal, especially of calcium, magnesium and/or zinc and/or an alkali carbonate or ammonium hydrogencarbonate or ammonium carbonate and/or a carbonate-containing rock powder.

11. Process according to one of the Claims 1 to 10, characterised in that at least one of the components contains a wetting agent which is active in an acid medium and/or an in acidic medium active foam stabilizing agent and/or a thixotropic agent and/or a liquefier or a hydrophobising agent.

12. Process according to one of the Claims 1 to 11, characterised in that the production of the foamed composition is prepared as a moulded part or by application onto a substrate with the inclusion of organic and/or inorganic fibers such as cellulose fibers, alumosilicate fibers, glass fibers, and/or woven material and/or other types of strengthening or reinforcing materials, like mesh, glass nets, woven metal, etc.

13. Process according to Claims 1 to 12, characterised in that the hardening and drying of the foamed composition occurs under the influence of warm air, radiant heat, high-frequency or micro wave energy.

14. Kit of parts comprising a binder component A, which contains an acid aqueous solution of predominantly polyvalent, preferably bivalent or trivalent, cations and phosphoric acid to form a phosphate, with in each case on average 0.8 to 1.75 protons of the tribasic phosphoric acid molecules being neutralized by the cations, in which solution there are finely dispersed one or more types of a granular, lamellar or pulverulent filler, whith a viscosity at room temperature within the range 2000 mPa.s to 80 000 mPa.s, preferably however within the range 6,500 mPa.s to 60,000 mPa.s, being adjusted preferably by selecting the type, consistency and/or quantity of the filler and/or water content thereof, as used in Claims 1 to 13 as pre-mixed, pasted mixture of substances,
and a foaming agent-hardener containing component (B), as used in Claims 1 to 13, which depending on the case contains filler, as pre-mixed, dry or water-pasted mixture of substances, to be dosed in corresponding manner, in quantitative ratios of the component (A) to the component (B) such that when the two components are mixed the secondary protons of the phosphates are predominantly neutralized and whereby hydrophobised cellular materials are excluded as fillers.

15. Moulded parts obtainable by the process according to Claims 1 to 13.

## Revendications

1. Procédé de production d'une mousse au moins en majeure partie inorganique masse ou d'une piece moulée, par mélange rapide d'une
composante (A), contenant une solution aqueuse acide de cations essentiellement polyvalents, préférablement bi- ou bivalents, et d'acide phosphorique pour la formation d'un phosphate, dans chaque cas en moyenne 0,8 à 1,75 protones des molécules d'acide phosphorique tribasiques étant neutralisés par les cationes, solution dans laquelle sont finement distribuées une ou plusieurs sortes d'un matériel de remplissage granuleux, lamellaire ou à l'état pulvérulent, avec une viscosité à la temperature ambiante de 2000 mPa.s à 80 000 mPa.s étant avantageusement ajustée par le choix de la nature, de la consistance et/ou de la quantité du matériel de remplisage et/ou de sa teneur en eau, avec une
composante (B) contenant
a) un oxyde, un hydroxyde ou un sel polyvalent d'un acide faible en tant que durcisseur, et
b) un agent mousseux agissant éventuellement en partie également en tant que durcisseur, tel qu'un carbonate, qui developpe un gaz, préférablement CO₂, dans des conditions de durcissement, le durcisseur réagissant en un espace de temps de 10 secondes à 60 minutes étant utilisé en une quantité telle qu'il neutralise presque tous les groupes secondaires d'acide phosphorique et la composante (B) étant présent de préférence sous forme d'une pâte ou d'une suspension aqueuse, et la durée du processus de moussage (temps de montée) étant avantageusement ajustée dans la plage de 3 secondes à 10 minutes par le choix de la nature, de la consistance et/ou la quantité de l'agent moussant et le processus de prise de longue durée (temps de prise) étant avantageusement ajusté dans la plage de 10 secondes à 60 minutes par le choix de la nature, de la consistance et/ou la quantité des substances à effect durcissant,
et par introduction du mélange des composantes (A) et (B), desquels sont exclus en tant matériaux remplissants les matériaux cellulaires rendues hydrophobes, dans un espace ou sur un support, dans lequel ou sur lequel ont lieu la production de mousse et la prise de la masse melangée.

2. Procédé suivant la revendication 1, caractérisé en ce que la viscosite à la temperature habituelle de la composante (A) est ajustée dans la plage allant de 6 500 mPa.s à 60 000 mPa.s.

3. Procédé suivant la revendication 1 ou 2, caractérisé en ce que la durée du processus du developpement de gaz (temps de montée) est ajusté dans la plage allant de 5 secondes à 5 minutes.

4. Procédé suivant l'une quelconque des revendications 1 à 3, caractérisé en ce que le processus de prise (temps de prise) est ajusté dans la plage allant de 20 secondes à 10 minutes.

5. Procédé suivant l'une quelconque des revendications 1 à 4, caractérisé en ce que les groupes phophoriques acides residuels sont neutralisés par des additifs réagissant lentement contenus préférablement dans un matériel de remplissage dans une ou dans les deux composantes dans un lent processus de maturation.

6. Procédé suivant l'une quelconque des revendications 1 à 5, caractérisé en ce que les deux composantes (A) et (B) sont mélangées dans un processus continu dans une temps de démarrage dans la plage allant de 0,1 secondes à 60 secondes.

7. Procédé suivant l'une quelconque des revendications 1 à 5, caractérisé en ce que les deux composantes (A) et (B) sont melangées dans un processus continu dans une temps de démarrage dans la plage allant de 2 secondes à 60 secondes.

8. Procédé suivant l'une quelconque des revendications 1 à 7, caractérisé en ce que la composante (A) et/ou la composante (B) contient un matériel de remplissage ayant une taille préférée de particules inférieure à 200 µ, de préférence inférieure à 100 µ, en particulier inférieure à 45 µ, de préference de la bauxite, du quartz, de l'oxyde d'aluminium, du feldspath, de la wollastonite, de la mullite ou de la magnesite calcinée et/ou au moins en partie un matériel de remplissage à structure lamellaire ayant une taille de particules de préférence inférieure à 100 µ, en particulier inférieure à 45 µ, de préférence du mica ou du schiste broyés.

9. Procédé suivant l'une quelconque des revendications 1 à 8, caractérisé en ce que la fraction de durcisseur de la composante (B) contient un oxyde métallique polyvalent reactive en condition acide dans les conditions habituelles, en particulier oxyde de magnésium, oxyde de calcium, oxyde de zinc, oxyde de fer, oxyde de zirkonium et/ou un hydroxyde métallique polyvalent, surtout Mg(0H)₂, Ca(0H)₂, Zn(0H)₂, hydroxide de fer, Mn(0H)₂ et/ou un ciment hydraulique et/ou un poudre rocheuse basique et/ou un sel d'un acide faible, en particulier un carbonate.

10. Procédé suivant l'une quelconque des revendications 1 à 9, caractérisé en ce que l'agent mousseux de la composante (B) est un carbonate ou un carbonate basique d'un métal polyvalent, en particulier de calcium, de magnésium et/ou de zinc et/ou un carbonat d'alcali ou un bicarbonate d'ammonium ou un carbonate d'ammonium et/ou une roche broyée qui contient un carbonate.

11. Procédé suivant l'une quelconque des revendications 1 à 10, caractérisé en ce qu'au moins l'un des composantes contient un agent mouillant actif en milieu acide et/ou un stabilisant de mousse actif en milieu acide et/ou un agent de thixotropie et/ou un plastifiants de malaxage ou un imperméabilisant.

12. Procédé suivant l'une quelconque des revendications 1 à 11, caractérisé en ce que la production de la masse mousse s'effectue sous forme de pièce moulée ou par application sur un support avec insertion des fibres organiques et/ou inorganiques, telles que des fibres de cellulose, les fibres de silicates d'aluminium, les fibres de verre, et/ou le tissu et/ou d'un autre matériau de renforcement ou d'armature, par exemple treilles de renfort, réseaux de verre, tissus tricotés métalliques, etc.

13. Procédé suivant les revendications 1 à 12, caractérisé en ce que le processus de prise et de séchage de la masse mousse s'effectuent sous l'influence d'air chaud, de chaleur radiante, de hautes fréquences ou d'énergie de micro-ondes.

14. Nécessaire constitué d'une composante de type liant (A), contenant une solution aqueuse acide de cations essentiellement polyvalents, de préférence bi- ou trivalents, et d'acide phosphorique pour la formation d'un phosphate, dans chaque cas en moyenne 0,8 à 1,75 des protons des molécules de l'acide phosphorique tribasiques étant neutralisés par les cations, solution dans laquelle sont finement distribuées plusieurs types d'un matériel de remplissage granulaire, lamellaire ou à l'état pulvérulent, avec une viscosité à temperature ambiante dans la plage de 2000 mPa.s à 80 000 mPa.s, mais de préférence dans la plage allant de 6 500 mPa.s à 60 000 mPa.s, étant avantageusement ajustée par le choix de la nature, de la consistance et/ou de la quantité du matériel de remplisage et/ou de sa teneur en eau, tel qu'utilisé dans les revendications 1 à 13, en tant que mélange de substances pâteux prémélangé; ainsi
que d'une composant (B) contenant des agent mousseux et de durcisseur et suivant le cas un matériel de remplissage, dosé au fur et à mesure de facon appropriée, tel qu'utilisé dans les revendications 1 à 13, en tant que mélange de substances sec ou transformé en une pâte dans de l'eau, prémélangé,
en proportions telles de la composante (A) à la composante (B) que, lors du mélange de deux composantes presque tous les groupes secondaires d'acide phosphorique sont neutralisés et les matériaux cellulaires rendus hydrophobes en tant que matériaux remplissants étant exclus.

15. Pièce moulée pouvant être obtenu conformément au procédé des revendications 1 à 13.
